# EUROPÄISCHE PATENTSCHRIFT

(11) **EP 0 393 222 B1**
(45) Veröffentlichungstag und Bekanntmachung des Hinweises auf die Patenterteilung: **31.08.1994**
(21) Anmeldenummer: 89107138.3
(22) Anmeldetag: 20.04.1989
(51) Int. Cl.: A23C 15/14, C11B 3/14

(54) **Verfahren zur Herstellung von cholesterin-reduziertem tierischem Fett, insbesondere Butterfett bzw. Butter, sowie Anlage zu deren Herstellung**
Process for preparing cholesterol-reduced animal fat, particularly butterfat or butter, and apparatus for their preparation
Procédé de préparation de graisse animale à teneur réduite en cholestérol, en particulier de la graisse de beurre ou du beurre, ainsi qu'installation pour la mise en oeuvre

(43) Veröffentlichungstag der Anmeldung: 24.10.1990
(73) Patentinhaber: Hoche, Hermann, D-91233 Neunkirchen (DE)
(72) Erfinder: Hoche, Hermann, D-91233 Neunkirchen (DE)
(74) Vertreter: Hansen, Bernd, Dr. Dipl.-Chem.

(56) Entgegenhaltungen:
- WO-A-88/02989
- CA-A- 873 859
- FR-A- 2 413 038
- US-A- 2 621 196
- US-A- 2 759 883
- US-A- 3 506 696
- JOURNAL OF THE AMERICAN OIL CHEMISTS SOCIETY, Band 60, Nr. 2, Februar 1983,Seiten 272-274, Champaign, Illinois, US; F.A. DUDROW: "Deodorization of edibleoil"
- JOURNAL OF AMER. OIL CHEMISTS' SOCIETY, Band 58, Nr. 1, Januar 1981, Seiten51A-54A, Champaign, Illinois, US; T.L. MOUNTS: "Chemical and physical effectsof processing fats and oils"
- JOURNAL OF DAIRY RESEARCH, Band 55, Nr. 3, 1988, Seiten 361-371; J. ARUL et al.: "Distribution of cholesterol in milk fat fractions"

## Beschreibung

Die Erfindung betrifft ein Verfahren zur Herstellung von cholesterin-reduziertem tierischen Fett, insbesondere Butterfett bzw. Butter. Die Erfindung bezieht sich auch auf die Verwendung einer Anlage zur Reduzierung des Cholesteringehaltes in Fetten, sowie Butter bzw. Butterfett mit reduziertem Cholesteringehalt.

Tierische Fette, wie Milchfette, Butterfette, Butter aber auch Schweinefette, Rinderfette etc., sind wertvolle Materialien, die aus dem Nahrungsbedarf nicht mehr wegzudenken sind. Butter wird üblicherweise aus Milch, Sahne (Rahm) oder Molkensahne (Molkenrahm), auch unter Verwendung von Wasser und Speisesalz, als plastisches Gemisch gewonnen.

Es sind verschiedene Buttersorten bekannt, beispielsweise Sauerrahmbutter, Süssrahmbutter oder mild gesäuerte Butter, in Abhängigkeit von den Ausgangsprodukten und Verarbeitungsbedingungen. Abgesehen hiervon stellt Butter kein in seiner chemischen Zusammensetzung eindeutig festgelegtes Produkt dar, da die Zusammensetzung, Konsistenz und Farbe in Abhängigkeit von der Ernährung und den Haltungsbedingungen der Kühe schwanken können.

Butterfett wird üblicherweise aus Butter gewonnen, der Wasser und Milchbestandteile entzogen werden. Dadurch wird eine grössere Haltbarkeit des Nahrungsmittels erzielt, das sich hierdurch hervorragend für den industriellen Gebrauch bei der Nahrungsmittelproduktion eignet, z.B. bei der Herstellung von Speiseeis, Biskuitprodukten etc.. Butterfett kann jedoch auch direkt als solches verzehrt werden.

Der hohe ernährungsphysiologische Wert wie auch die beliebte geschmackliche Wirkung von Butter bzw. Butterfett stehen ausser Zweifel. Es ist aber auch bekannt, dass die moderne Ernährungsweise in Kombination mit vielfach bewegungsarmen beruflichen Tätigkeiten des Menschen zu gesundheitlichen Schwierigkeiten führen können. Dabei ruht das Augenmerk auch auf dem Anteil von Cholesterin in Nahrungsmitteln.

Durch falsche Ernährung, aber auch durch bestimmte Enzymdefekte können pathologisch erhöhte Cholesterinspiegel im Serum entstehen. Diese werden für die Entstehung von Arteriosklerose einschliesslich der begleitenden Herz- und Kreislaufproblematik für mitverantwortlich gehalten. Die Meinungen über die Zusammenhänge zwischen der Aufnahme cholesterinhaltiger Nahrung und Hypercholesterinämien sind jedoch geteilt. Bekannt ist, dass der Cholesterinwert durch die Aufnahme von Nahrungsmitteln beeinflusst wird, aber auch durch psychische Belastungen, Zuführung von Alkohol etc.. Nach einzelnen Arbeiten sollen Öle mit einem hohen Gehalt an ungesättigten Fettsäuren befähigt sein, den Blutcholesteringehalt zu senken und in vielen Fällen gegen Arteriosklerose zu wirken. Tatsache ist aber, dass diese ungesättigten Fettsäuren bzw. Nahrungsmittelprodukte, die diese in beträchtlichem Anteil enthalten, in ihrem Geschmack, aber auch im Hinblick auf den Anteil an wertvollen Nahrungsbestandteilen dem Naturprodukt Butter bzw. hieraus gewonnenem Butterfett nicht gleichkommen.

Aus WO-A-88/02989 ist ein Verfahren zur Behandlung von Fetten und Ölen zur Desodorierung und gleichzeitigen Erniedrigung des Cholesteringehaltes bekannt. In einer ersten Verfahrensstufe wird dem zu behandelnden Öl, insbesondere Fischöl, Wasserdampf bei einem Druck von 1,33 bis 9,33 mbar bei einer Temperatur von ca. 204 bis 288°C zugeführt. Danach erfolgt eine Schnellverdampfung und dann wird die Mischung einem Fallfilmverdampfer zugeführt. Dort wird das Öl von oben nach unten geleitet, während Wasserdampf im Gegenstrom von unten nach oben geleitet wird. Nachteilig bei diesem Verfahren ist ein ziemlich hoher Verlust an Endprodukten und ein hoher Verbrauch aus der Dampfmenge.

Aus FR-A-2 413 038 ist die Cholesterin-Reduzierung mit Hilfe eines Fallfilmverdampfers bekannt.

Aus US-A-27 59 883, US-A-26 21 196 und CA-A-873 859 sind Verfahren zur Desodorierung von Ölen, u.a. Sojabohnenöl, bekannt. Eine Cholesterinreduzierung von Butter bzw. Butterfetten ist jedoch nicht erwähnt.

Der vorliegenden Erfindung liegt die Aufgabe zugrunde, ein Verfahren zur Herstellung tierischer Fette, insbesondere aber natürlicher Butter bzw. Butterfett, anzugeben, die bzw. das ein in seiner natürlichen Zusammensetzung der Fettkomponenten unverandertes, an unerwünschten Begleitstoffen reduziertes Produkt. Insbesondere soll dies ohne Anwendung chemischer Zusätze erfolgen.

Unerwünschte Begleitstoffe in tierischen Fetten, insbesondere der Butter bzw. im Butterfett können vornehmlich Cholesterin, aber auch Ranziditätskomponenten bzw. ein erhöhtes Mass an freien Fettsäuren sowie erhöhte Peroxidwerte darstellen.

Diese Aufgabe wird durch ein Verfahren zur Herstellung von cholesterin-reduziertem tierischen Fett, insbesondere Butterfett bzw. Butter gelöst, das dadurch gekennzeichnet ist, dass man tierisches Fett in dem Temperaturbereich von 195 bis 250°C bei einem Druck von 0,5 bis 5 mbar unter stetiger Zuführung von Wasser behandelt, das in Form von Einspritzdampf durch eine multiple Verteilung über die gesamte Länge eines oder mehrerer Destillationszylinder, die horizontal angeordnet sind, mit dem Ölbett in Kontakt gebracht wird, die Brüden abtrennt und das Fett abkühlt, dem gegebenenfalls Fettrekombinationsstoffe zugeführt werden.

Eine Behandlung von Fetten bei erhöhter Temperatur ist bereits bekannt, z.B. bei der physikalischen Raffination, bei der Desodorierung und bei der destillativen Fraktionierung von Fettsäuren. Dabei schwanken die Prozesstemperaturen und die Höhe des Vakuums, sofern solches Anwendung findet, in Abhängigkeit von der Zusammensetzung des Ausgangsfettes bzw. der Art der Behandlung.

Als tierische Fette können im Rahmen der Erfindung Milchfette, Butterfette, Butter aber auch Schweine- oder Rinderfette bzw. Fischöle behandelt werden. Die Erfindung wird jedoch nachstehend anhand der bevorzugten Fette, nämlich Butterfett bzw. Butter, weiter beschrieben.

Das erfindungsgemässe Verfahren wird vorzugsweise im Bereich von 200 bis 245°C und insbesondere bevorzugt bei 205 bis 235 bzw. 240°C im Vakuum durchgeführt.

Das Vakuum beträgt üblicherweise 0,5 bis 5 mbar und vorzugsweise 1 bis 4 mbar, wobei Drucke von 1 bis 3 mbar sich als besonders günstig erwiesen haben.

Bei der Temperaturbehandlung wird Schlepp- oder Trägermaterial bzw. -dampf eingesetzt. Im Rahmen des erfindungsgemässen Verfahrens hat sich hierfür Wasser (Dampf) als besonders geeignet erwiesen, da es sich gegenüber dem Fett unter den Reaktionsbedingungen als verhältnismässig reaktionsträge erwiesen hat und natürlich leicht kondensierbar ist. Überraschend ist in besonderer Weise, dass, obwohl sich die geschmackliche Komposition des Butterfettes bzw. hieraus gewinnbarer Butter nicht oder nicht in erheblichem Masse durch die Hitzebehandlung unter Wasserzuführung bei den Prozesstemperaturen verändert, es zu einer sehr erheblichen Abtrennung an Cholesterin kommt. Offenbar können bei den angewandten Bedingungen auch eine befürchtete Umesterung und damit eine Veränderung und der Abtrieb der die Butterkomposition abrundenden Geschmacks- und Geruchskomponenten weitestgehend vermieden werden.

Der Anteil an während der Temperaturbehandlung zugeführtem Wasser kann variiert werden und beträgt vorteilhaft 0,5 bis 2,5 Gew.% Wasser, bezogen auf das Gewicht des zugeführten Ausgangsfettes. Besonders günstige Werte des zugeführten Wassers liegen im Bereich von 0,8 bis 2 Gew.% Wasser bzw. 1 bis 1,8 Gew.% dieses Schleppmittels.

Das (Butter)Fett kann direkt auf die Reaktionstemperatur gebracht werden, wobei es sich jedoch als günstig erwiesen hat, dies stufenweise vorzunehmen. Vorzugsweise kann dies mittels Wärmetauschern erfolgen.

Die Temperaturbehandlung selbst kann in einem geeigneten Wärmereaktor erfolgen, der für den Vakuumbetrieb ausgelegt ist. Dabei kann es günstig sein, die Temperaturbehandlung in mehreren, hintereinandergeschalteten Destillationsreaktoren, z.B. Destillationszylindern, durchzuführen.

Durch die Verwendung von Einspritzdampf wird eine gute Verteilung mit dem erhitzten Ölprodukt erzielt. Es wird auch eine maximale Oberfläche zum Vakuumbrüdenraum erreicht. Die Brüden oberhalb des Ölspiegels können dann vorteilhaft durch ein horizontales, an der oberen Tangente mit Öffnungen versehenes Rohr rasch und gleichmässig abgezogen werden. Der Zylinder kann dabei in seiner Längsachse durch ein Wehrblechsystem zweckmässig unterteilt sein. Vorzugsweise wird das Verfahren im Bereich von 200 bis 245°C bei einem Druck von 1 bis 3 mbar unter stetiger Zuführung von 1 bis 2 Gew.% Wasser durchgeführt.

Je nach Art der gewählten Prozessbedingungen im Rahmen des erfindungsgemässen Verfahrens sowie des Typs der Anlage kann die Reaktion unterschiedlichen Zeitaufwand beanspruchen. Üblicherweise sind Behandlungszeiten von 30 Minuten bis zu einigen Stunden zweckmässig.

Nach einer Ausführungsform des erfindungsgemässen Verfahrens kann das zugeführte (Butter)Fett, gegebenenfalls stufenweise, durch ein oder mehrere Destillationszylinder zur Anhebung auf Reaktionstemperatur geführt werden, bevor es dort unter Vakuum mit Wasser in Kontakt zur Reduzierung des Cholesteringehaltes gebracht wird. In diesem Falle wirken der bzw. die Destillationsgefässe gleichzeitig als Wärmetauscher wie auch als Destillationsreaktor.

Bei der Wärmebehandlung des erfindungsgemässen Verfahrens fallen Brüdendämpfe an, die kontinuierlich oder chargenweise aus dem Brüdenraum abgezogen werden. Diese enthalten Cholesterin, freie Fettsäuren und gegebenenfalls Tocopherole. Diese können aus dem Brüdenkondensat zurückgewonnen werden. Dabei ist es möglich, nach erfolgter Abtrennung zumindest teilweise freie Fettsäure sowie gegebenenfalls Tocopherole dem Endprodukt des Verfahrens, soweit dies gewünscht ist, wieder zuzuführen.

Durch das erfindungsgemässe Verfahren ist es in überraschender Weise möglich, den Cholesterinanteil des zugeführten tierischen Fette, z.B. des Butterproduktes, üblicherweise Butterfett, sehr erheblich zu reduzieren. Üblicherweise wird eine Reduzierung des Cholesterin-Ausgangswertes von mindestens 70 % im Rahmen des erfindungsgemässen Verfahrens erzielt. Durch die Anwendung der im Rahmen des erfindungsgemässen Verfahrens besonders günstigen Bedingungen ist es jedoch möglich, zum Teil auch bei etwas höherer Reaktionsdauer, noch stärkere Reduktionen des Cholesterin-Ausgangswertes zu erreichen, z.B. auf vorteilhaft 80 bzw. 90 Gew.% bzw. noch geringer.

Dazu ist von Interesse, dass im Körper des Erwachsenen ca. 1 bis 2 g Cholesterin täglich synthetisiert und bei fettarmer Kost 0,04 bis 0,1 g, bei fettreicher Kost bis zu 1,4 g Cholesterin täglich aufgenommen werden können. Nach Römpp "Chemielexikon", 8. Auflage, Band 1, Seite 734 enthalten Nahrungsmittel je 100 g: Butter 244 mg, Margarine 186 mg, Rindfleisch 90 mg etc..

Durch das erfindungsgemässe Verfahren ist es möglich, die Cholesterin-Ausgangswerte von tierischem Fett, z.B. bei Butter(fett) im Bereich von 0,2 bis 0,4 g/100 g auf 0,01 bis 0,1 Gew.% zu senken. In vorteilhafter Weise wird es durch das erfindungsgemässe Verfahren jedoch möglich, Cholesterinwerte im Bereich von 0,01 bis 0,08, insbesondere bevorzugt bis zu 0,06 Gew.% zu erreichen. Dabei kann der Gehalt an freier Fettsäure auf sehr niedrige Werte bzw. nahe Null eingestellt werden. Das Butterfett kann dabei einen Gehalt an freier Fettsäure im Bereich bis 0,1 Gew.% aufweisen.

Im Rahmen der Erfindung wird somit auch ein cholesterinarmes Butterfett beansprucht, dessen Cholesteringehalt bei unter 0,1 Gew.%, vorteilhaft im Bereich von 0,01 bis 0,08 und insbesondere unter dem Wert von 0,06 liegt. Es wird auch eine Butter mit einem Cholesteringehalt von bis zu 0,1 Gew.% vorzugsweise weniger als 0,06 Gew.%, beansprucht. Sowohl die die Butter als auch das Butterfett sind nach einem Verfahren gemäß einem der Ansprüche 1 bis 9 erhältlich; es ist aber ein Produkt ausgenommen, das unter Verwendung eines Fallfilmverdampfers und durch Führung des zu behandelnden Butterfettes bzw. der Butter und des Wasserdampfes im Gegenstrom erhalten ist. Ebenso ist ein Produkt ausgenommen, das durch Molekulardestillation erhalten ist.

Soweit es im Rahmen der Erfindung gewünscht ist, kann das cholesterin-reduzierte Fett, z.B. Butterfett, durch die Zufügung von Butterrekombinationsstoffen in Butter zurückgeführt werden, die in ihren natürlichen Fettbestandteilen und auch ihrem Geschmack von Butter kaum bzw. nicht unterscheidbar ist, jedoch einen sehr erheblich niedrigeren Cholesteringehalt aufweist bzw. hiervon frei ist. Als solche Butterrekombinationsstoffe dienen zweckmässig solche, die bei der Gewinnung von Butterfett aus Butter abgetrennt werden. Bei diesen handelt es sich üblicherweise um Wasser und Milchbestandteile, wie Eiweissstoffe, Milchzucker usw.. Bei der erfindungsgemässen Herstellung von Butter können dem cholesterin-reduzierten Butterfett deshalb zweckmässig Wasser, Eiweiss(bestandteile bzw. -stoffe) sowie gegebenenfalls natürliche oder naturidentische Geruchs-, Geschmacks- bzw. Konservierungskomponenten zugefügt werden, wie sie für Butter typisch sind. Als solche können vorteilhaft Tocopherole, Carotinoide oder Salz Anwendung finden. Gegebenenfalls können auch lebensmittelrechtlich zugelassene Antioxidanzien, wie Zitronensäure, zugesetzt werden. Eine Zufügung solcher Komponenten, auch von naturidentischen Aromastoffen, kann auch deshalb zweckmässig sein, weil bei der Durchführung des erfindungsgemässen Verfahrens zur Cholesterin-Reduzierung eine (Teil)Abtrennung von leicht flüchtigen Geruchs- bzw. Geschmacks- oder Konservierungskomponenten, wie der Tocopherole, miterfolgen kann.

Die Erfindung betrifft auch die Verwendung einer Anlage zur Reduzierung des Gehaltes an Cholesterin von tierischen Fetten bzw. Ölen, die Wärmetauscher zur Aufheizung des Fettes auf Reaktionstemperatur, mindestens ein Vakuum-Destillationsgefäss mit Zuführungen zur Eindosierung von Schleppmaterial, Abzugsleitungen für Brüden, gegebenenfalls eine Kondensationsapparatur für Brüden, Abzugsleitungen für das gereinigte Fett, sowie gegebenenfalls Kühlvorrichtungen hierfür, sowie Vorratsbehälter für cholesterinarmes Fett bzw. Zuschlagsstoffe, sowie gegebenenfalls Mischtanks für cholesterinfreies bzw. -armes Fett und Rekombinationsstoffe aufweist, zur Reduzierung des Cholesteringehaltes von Butterfett oder Butter , wobei eine Anlage mit einem Fallfilmverdampfer ausgeschlossen ist.

Diese cholesterinarmen bzw. -freien Produkte eignen sich zur Herstellung von Lebens- und Genussmitteln in bekannter Weise, insbesondere aber von diätetischen Produkten.

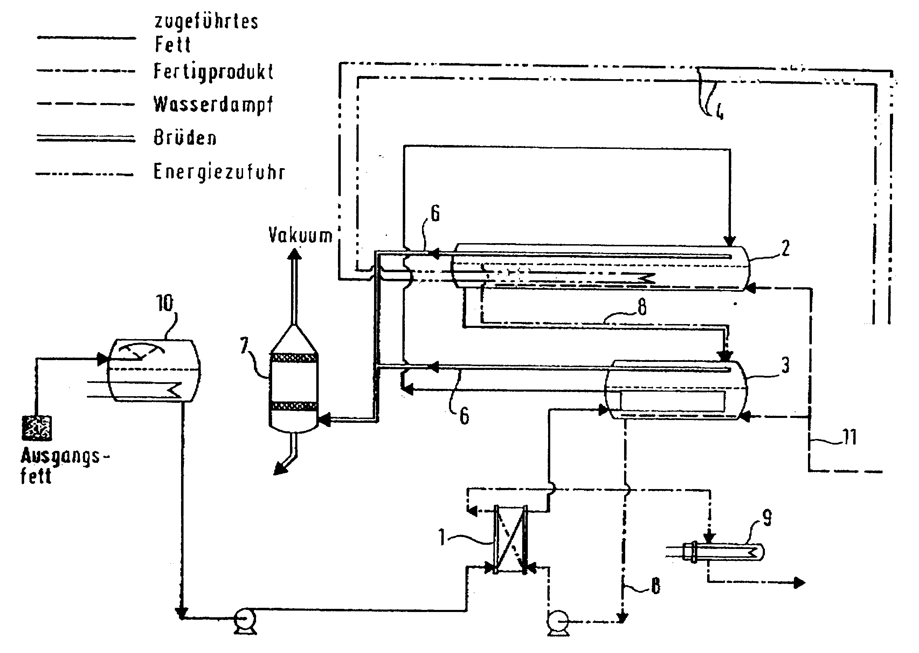

Die Erfindung wird in der Figur und dem folgenden Beispiel weiter erläutert. Die Figur zeigt eine erfindungsgemässe Anlage zur Behandlung von Butter bzw. Butterfett.

Hierin durchläuft das in seinem Gehalt an Cholesterin zu reduzierende Ausgangsprodukt einen Entgaser (10) und tritt in den Wärmetauscher (1) und sodann in ein erstes Destillationsgefäss (3) unter weiterem Wärmeaustausch ein.

Es wird über Rohrleitungen in das nachfolgende Vakuum-Destillationsgefäss (2) und hiernach weiter in das Vakuum-Destillationsgefäss (3), in die stetig Wasserdampf eindosiert wird zur Wärmebehandlung im Vakuum geführt. Die erforderliche Wärmezufuhr kann über die Zuführungen (4) mittels Hochdruckdampf, elektrischer Energie, Wärmeträgeröle etc. erfolgen. Der Wasserdampf wird über die Zuführungen (11) in die Vakuum-Destillationsgefäße (2, 3) stetig zudosiert. Die Brüden werden über die Abzugsleitungen (6) in eine Kondensationsapparatur (7) geleitet, aus dem die abgeführten Fettsubstanzen bzw. Wasser im Kopf bzw. Sumpf niedergeschlagen bzw. abgetrennt werden. Das aus dem Destillationsgefäss (2, 3) austretende cholesterin-reduzierte Fettprodukt durchläuft über die Abzugsleitungen (8) den Wärmeaustauscher (1) unter Abkühlung, sowie die Kühlvorrichtung (9). Nicht in der Anlage gezeigt sind die Vorratsbehälter für cholesterinarmes bzw. -freies Fett bzw. für Rekombinationsstoffe, sowie Mischtanks, in dem das cholesterin-reduzierte Fettprodukt mit Rekombinationsstoffen umgesetzt werden kann.

Die Erfindung wird nachstehend anhand einer bevorzugten Ausführungsform weiter erläutert.

### BEISPIEL

In die in der Figur gezeigte Anlage wird Butterfett mit den folgenden Kenndaten eingeführt:

| | |
|---|---|
| Gehalt an freier Fettsäure: | 0,8 Gew.% |
| Feuchtigkeit | 0,1 Gew.% |
| Cholesterin | 0,3 Gew.% |
| Peroxidzahl | 0,5 |

Das Butterfett wird nach Durchleitung durch den Entgaser bei einer Temperatur im Bereich von 80 bis 90°C im ersten Wärmetauscher auf 145°C erhitzt. Im nachfolgenden Destillationsgefäss wird die Temperatur des Fettproduktes auf 190°C durch Wärmeaustauscher erhöht, wonach das Produkt zur Wärmebehandlung in die Destillationsgefässe eingeführt wird. Das Produkt wird hierin bei 230 bzw. 190°C und jeweils 1,5 mbar behandelt, wobei insgesamt 13 kg Wasserdampf/t Fettprodukt zugeführt werden. Die Reaktionszeit beträgt ca. 2 Stunden. Das bei der Wärmebehandlung in den Destillationsgefässen bei den Temperaturen von 230 und 190°C abziehbare Brüdenprodukt wird laufend abgeführt und über das Kondensationsgefäss aufgetrennt. Das hitzebehandelte Produkt wird über den Wärmetauscher sowie die nachfolgende Kühlvorrichtung auf Raumtemperatur abgekühlt und in einen Lagertank überführt.

Das derart behandelte Butterfett wies folgende Kennwerte auf:

| | |
|---|---|
| Gehalt an freier Fettsäure max. | 0,05 Gew.% |
| Feuchtigkeit | 0 |
| Cholesterin weniger als | 0,08 Gew.% |
| Peroxidzahl | 0 |

## Patentansprüche

1. Verfahren zur Herstellung von cholesterin-reduziertem, tierischem Fett, insbesondere Butterfett bzw. Butter, dadurch **gekennzeichnet,** dass man das Fett in dem Temperaturbereich von 195 bis 250°C bei einem Druck von 0,5 bis 5 mbar unter stetiger Zuführung von Wasser behandelt, das in Form von Einspritzdampf durch eine multiple Verteilung über die gesamte Länge eines oder mehrerer Destillationszylinder, die horizontal angeordnet sind, mit dem Ölbett in Kontakt gebracht wird, die Brüden abtrennt und das Fett abkühlt, dem gegebenenfalls Rekombinationsstoffe zugeführt werden.

2. Verfahren nach Anspruch 1, dadurch **gekennzeichnet,** dass das Fett stufenweise auf die Reaktionstemperatur, vorzugsweise mittels Wärmetauscher, gebracht wird.

3. Verfahren nach Anspruch 1, dadurch **gekennzeichnet,** dass 0,5 bis 2,5 Gew.% Wasser, bezogen auf das Gewicht des zugeführten (Butter)Fettes, im Verlauf der Temperaturbehandlung zudosiert werden.

4. Verfahren nach Anspruch 1, dadurch **gekennzeichnet,** dass das Verfahren im Bereich von 200 bis 245°C bei einem Druck von 1 bis 3 mbar unter stetiger Zuführung von 1 bis 2 Gew.% Wasser durchgeführt wird.

5. Verfahren nach einem oder mehreren der vorhergehenden Ansprüche, dadurch **gekennzeichnet,** dass die Temperaturbehandlung in mehreren hintereinandergeschalteten Destillationsreaktoren durchgeführt wird.

6. Verfahren nach einem oder mehreren der vorhergehenden Ansprüche, dadurch **gekennzeichnet,** dass das zugeführte Fett durch einen oder mehrere Destillationszylinder zur Anhebung auf Reaktionstemperatur geführt wird, bevor es dort unter Vakuum mit Wasser in Kontakt gebracht wird.

7. Verfahren nach Anspruch 1, dadurch **gekennzeichnet,** dass die Brüdendämpfe kondensiert und aus dem Kondensat freie Fettsäuren und Cholesterin gewonnen werden.

8. Verfahren nach Anspruch 1, dadurch **gekennzeichnet,** dass als Butterrekombinationsstoffe Wasser, Milchbestandteile, sowie gegebenenfalls Tocopherol, Carotinoide oder Salz zugeführt werden.

9. Verfahren nach einem oder mehreren der vorhergehenden Ansprüche, dadurch **gekennzeichnet,** dass Butterfett mit einem Gehalt an freier Fettsäure von 0,2 bis 1 Gew.% und einem Cholesteringehalt von 0,2 bis 0,5 Gew.% der Temperaturbehandlung zugeführt wird.

10. Verwendung einer Anlage, die Wärmeaustauscher (1) zur Aufheizung des Fettes auf Reaktionstemperatur, mindestens ein Vakuum-Destillationsgefäß (2,3) mit Zuführungen (11) zur Eindosierung von Schleppmaterial, Abzugsleitungen (6) für Brüden, gegebenenfalls eine Kondensationsapparatur (7) für Brüden, Abzugsleitungen (8) für das gereinigte Fett sowie gegebenenfalls Kühlvorrichtungen (9) hierfür, sowie Vorratsbehälter für cholesterinarmes Fett bzw. Zuschlagsstoffe, sowie gegebenenfalls Behälter zur Vermischung von cholesterinfreiem bzw. -armem Fett und Fettrekombinationsstoffen aufweist, zur Reduzierung des Cholesteringehaltes von Butterfett oder Butter, wobei eine Anlage mit einem Fallfilmverdampfer ausgeschlossen ist.

11. Butterfett erhältlich nach einem Verfahren gemäß einem der Ansprüche 1 bis 9, mit einem Cholesteringehalt von bis zu 0,1 Gew.%, wobei ein Produkt ausgenommen ist, das unter Verwendung eines Fallfilmverdampfers und durch Führung des zu behandelnden Butterfettes und des Wasserdampfes im Gegenstrom erhalten ist und wobei ein Produkt ausgenommen ist, das durch Molekulardestillation erhalten ist.

12. Butter, erhältlich nach einem Verfahren gemäß einem der Ansprüche 1 bis 9, mit einem Cholesteringehalt von bis zu 0,1 Gew.%, wobei ein Produkt ausgenommen ist, das unter Verwendung eines Fallfilmverdampfers und durch Führung der zu behandelnden Butter und des Wasserdampfes im Gegenstrom erhalten ist, und wobei ein Produkt ausgenommen ist, das durch Molekulardestillation erhalten ist.

13. Butter bzw. Butterfett nach Anspruch 11 oder 12, mit einem Cholesteringehalt von weniger als 0,06 Gew.%.

## Claims

1. Process for producing cholesterol-reduced animal fat, in particular butter fat or butter, characterised in that the fat is treated in the temperature range from 195 to 250°C at a pressure of 0.5 to 5 mbar under continuous supply of water, which is brought into contact with the oil bed in the form of injected steam by means of multiple distribution over the entire length of one or more distillation cylinders arranged horizontally, the water vapours are separated off and the fat, to which recombination substances are optionally supplied, is cooled.

2. Process according to claim 1, characterised in that the fat is brought to the reaction temperature in stages, preferably by means of heat exchangers.

3. Process according to claim 1, characterised in that 0.5 to 2.5 wt.% of water, based on the weight of the (butter) fat supplied, are metered in in the course of heat treatment.

4. Process according to claim 1, characterised in that the process is carried out in the range from 200 to 245°C at a pressure of 1 to 3 mbar with continuous supply of 1 to 2 wt.% of water.

5. Process according to one or more of the preceding claims, characterised in that heat treatment is carried out in several distillation reactors connected in series.

6. Process according to one or more of the preceding claims, characterised in that the fat supplied is passed through one or more distillation cylinders to raise it to the reaction temperature before it is brought into contact with water there under vacuum.

7. Process according to claim 1, characterised in that the water vapours are condensed and free fatty acids and cholesterol are recovered from the condensate.

8. Process according to claim 1, characterised in that water, milk constituents, and optionally tocopherol, carotinoids or salt, are supplied as butter recombination substances.

9. Process according to one or more of the preceding claims, characterised in that butter fat containing 0.2 to 1 wt.% of free fatty acid and having a cholesterol content of 0.2 to 0.5 wt.% is supplied for heat treatment.

10. Use of a plant which has heat exchangers (1) for heating the fat to reaction temperature, at least one vacuum distillation vessel (2, 3) having supply lines (11) for metering in entrainer material, discharge pipes (6) for water vapours, optionally one condensation apparatus (7) for water vapours, discharge pipes (8) for the purified fat and optionally cooling devices (9) therefor, and supply containers for low-cholesterol fat or additives, and optionally containers for mixing cholesterol-free or low-cholesterol fat and fat recombination substances, for reducing the cholesterol content of butter fat or butter, a plant having a falling-film evaporator being excluded.

11. Butter fat which can be obtained by the process according to one of claims 1 to 9, having a cholesterol content of up to 0.1 wt.%, a product obtained using a falling-film evaporator and by passing the butter fat to be treated and the steam in counter-current being excluded, and a product obtained by means of molecular distillation being excluded.

12. Butter which can be obtained by the process according to one of claims 1 to 9, having a cholesterol content of up to 0.1 wt.%, a product obtained using a falling-film evaporator and by passing the butter to be treated and the steam in counter-current being excluded, and a product obtained by means of molecular distillation being excluded.

13. Butter or butter fat according to claim 11 or 12, having a cholesterol content of less than 0.06 wt.%.

## Revendications

1. Procédé de préparation de graisse animale à teneur réduite en cholestérol, en particulier de la graisse de beurre ou du beurre, caractérisé en ce que l'on traite la graisse dans la plage de température allant de 195 à 250° C, sous une pression de 0,5 à 5 mbar, avec apport permanent d'eau, qui est placée en contact avec le lit d'huile sous forme de vapeur injectée au moyen d'une distribution multiple, sur la totalité de la longueur d'un ou plusieurs cylindres de distillation disposés horizontalement, les buées étant séparées et la graisse refroidie, en lui ajoutant le cas échéant des produits de recombinaison.

2. Procédé selon la revendication 1, caractérisé en ce que la graisse est amenée par étapes à la température de réaction, de préférence au moyen d'échangeurs de chaleur.

3. Procédé selon la revendication 1, caractérisé en ce qu'au cours du traitement thermique, l'on ajoute de façon dosée de 0,5 à 2,5 % en poids d'eau, rapportée au poids de la graisse (de beurre) amenée.

4. Procédé selon la revendication 1, caractérisé en ce que l'on effectue le procédé dans la plage de température allant de 200 à 245° C sous une pression de 1 à 3 mbar avec apport permanent de 1 à 2 % en poids d'eau.

5. Procédé selon l'une ou plusieurs des revendications précédentes, caractérisé en ce que le traitement thermique est effectué dans plusieurs réacteurs de distillation mis en circuit les uns derrière les autres.

6. Procédé selon l'une ou plusieurs des revendications précédentes, caractérisé en ce que la graisse amenée est guidée dans un ou plusieurs cylindres de distillation, en vue de rejoindre la température de réaction, avant d'y être mise en contact avec l'eau, sous vide.

7. Procédé selon la revendication 1, caractérisé en ce que les vapeurs des buées sont condensées et des acides gras libres et le cholestérol étant récupérés à partir du condensat.

8. Procédé selon la revendication 1, caractérisé en ce que l'on amène, à titre de substances de recombinaison du beurre, de l'eau, des composants laitiers ainsi que, par exemple, du tocophérol, de la carotinoïde ou du sel.

9. Procédé selon l'une ou plusieurs des revendications précédentes, caractérisé en ce que la graisse de beurre est amenée au traitement thermique avec une teneur en acides gras libres comprise dans la plage allant de 0,2 à 1 % en poids et une teneur en cholestérol comprise dans la plage allant de 0,2 à 0,5 % en poids.

10. Utilisation d'une installation, présentant des échangeurs de chaleur (1), pour chauffer la graisse à la température de réaction, au moins un récipient de distillation sous vide (2, 3) avec des alimentations (11) destinées à introduire de façon dosée un agent entraînant, des conduites d'extraction (6) destinées aux buées, le cas échéant un appareillage de condensation (7) pour les buées, des conduites d'extraction (8) pour la graisse épurée, ainsi que, le cas échéant, des dispositifs de refroidissement (9) pour celle-ci, ainsi que des récipients de stockage pour la graisse à faible teneur en cholestérol ou bien les additifs, ainsi que, le cas échéant, des récipients pour effectuer le mélange entre la graisse sans cholestérol ou à faible teneur en cholestérol et les produits de recombinaison des graisses, pour effectuer la réduction de la teneur en cholestérol de la graisse de beurre ou du beurre, étant exclue l'éventualité d'une installation avec un évaporateur à film tombant.

11. Graisse de beurre pouvant être obtenue suivant un procédé selon l'une des revendications 1 à 9, avec une teneur en cholestérol allant jusqu'à 0,1 % en poids, à l'exception d'un produit obtenu en utilisant un évaporateur à film tombant et par passage de la graisse de beurre à traiter et de la vapeur d'eau à contre-courant, et à l'exception d'un produit obtenu par distillation moléculaire.

12. Beurre obtenu suivant un procédé selon l'une des revendications 1 à 9, avec une teneur en cholestérol allant jusqu'à 0,1% en poids, à l'exception d'un produit obtenu en utilisant un évaporateur à film tombant et par passage du beurre à traiter et de la vapeur d'eau à contre-courant, et à l'exception d'un produit obtenu par distillation moléculaire.

13. Beurre ou graisse de beurre selon la revendication 11 ou 12 ayant une teneur en cholestérol inférieure à 0,06 % en poids.
